**Europäisches Patentamt**

**European Patent Office**

**Office européen des brevets**

(11) Numéro de publication : **0 327 778 B1**

⑫　　　　**FASCICULE DE BREVET EUROPEEN**

(45) Date de publication du fascicule du brevet :
**22.07.92 Bulletin 92/30**

(51) Int. Cl.⁵ : **B64D 17/02, B64D 17/30**

(21) Numéro de dépôt : **88420381.1**

(22) Date de dépôt : **16.11.88**

(54) **Harnais sellette pour parachute du type à aile souple.**

(30) Priorité : **21.12.87 FR 8718331**

(43) Date de publication de la demande :
**16.08.89 Bulletin 89/33**

(45) Mention de la délivrance du brevet :
**22.07.92 Bulletin 92/30**

(84) Etats contractants désignés :
**AT CH DE FR GB IT LI**

(56) Documents cités :
**EP-A- 0 109 448**
**FR-A- 2 554 083**

(73) Titulaire : **LASER LAB (S.A.R.L.)**
**ZAE Des Glaisins**
**F-74000 Annecy Le Vieux (FR)**

(72) Inventeur : **Le Blanc, Michel**
**7bis Avenue François Favre**
**F-74000 Annecy (FR)**
Inventeur : **Amiel, Paul**
**48, rue d'Angoulème**
**F-74000 Annecy (FR)**

(74) Mandataire : **Gasquet, Denis**
**9, rue Général Ferrié**
**F-74000 Annecy (FR)**

## Description

La présente invention concerne un parachute du type à aile souple à caissons, présentant une structure cellulaire constituant une aile planante, généralement appelée parapente. Elle concerne plus particulièrement un harnais sellette destiné d'une part à porter le parachutiste, et d'autre part à piloter le parachute.

On connait déjà de tels parachutes, constitués par une aile planante formée par une paroi souple supérieure reliée à une paroi souple inférieure par des nervures verticales pour constituer des canaux, ou caissons, dont au moins certains sont ouverts vers l'avant au bord d'attaque. Ils comprennent aussi des suspentes fixées au voisinage de la paroi inférieure au droit des nervures. Lesdites suspentes servant à l'arrimage d'une charge, telle qu'un parachutiste, qui par traction sur des drisses de commande dirige l'aile par freinage et déformation de celle-ci. De telles ailes sont par exemple décrites dans les brevets français N° 2 234 188, N° 2 490 587, ainsi que dans la demande déposée par la demandresse sous le numéro 87 09978.

Ces parachutes ont un profil d'aile d'une certaine épaisseur, et l'air, qui pénètre dans les caissons ouverts à leur bord d'attaque donne sa forme à la voilure, et lui confère une certaine rigidité. En cours de descente, l'air accumulé dans les caissons forme une zone de pression stationnaire au niveau du bord d'attaque, reconstituant ainsi le profil de celui-ci, et l'ensemble se comporte comme une aile complète, qui permet au parachutiste de planer dans les airs.

Ce type de parachute est de plus en plus employé, et est devenu un sport très prisé dans les régions montagneuses. Avec de tels parachutes généralement appelés parapentes, le parachutiste est suspendu à sa voilure par un dispositif de retenue qui est, soit un harnais qui le porte, soit un harnais sellette qui le supporte. Avec les dispositifs selon l'art antérieur, la seule possibilité de pilotage de l'engin se fait à l'aide des freins par traction ou libération des drisses de commande modifiant la géométrie des bords de fuite de l'aile. Ce type de pilotage présente un certain nombre d'inconvénient.

La présente invention veut donc remédier à ces inconvénients en proposant un dispositif de retenue pour le parachutiste lui permettant de modifier la voilure tout en lui conservant sa portance maximale et ses qualités aérodynamiques.

D'autres caractéristiques, et avantages de l'invention se dégageront de la description qui va suivre en regard des dessins annexés qui ne sont donnés qu'à titre d'exemples non limitatifs.

Les figures 1 à 3 montrent un premier mode de réalisation d'un parachute.

Les figures 1 et 2 sont des vues en perspective montrant des harnais selon l'art antérieur.

La figure 3 est une vue en perspective montrant un parachute équipé d'un harnais selon l'invention.

Les figures 4 à 9 montrent un mode de réalisation d'un harnais sellette de pilotage selon l'invention.

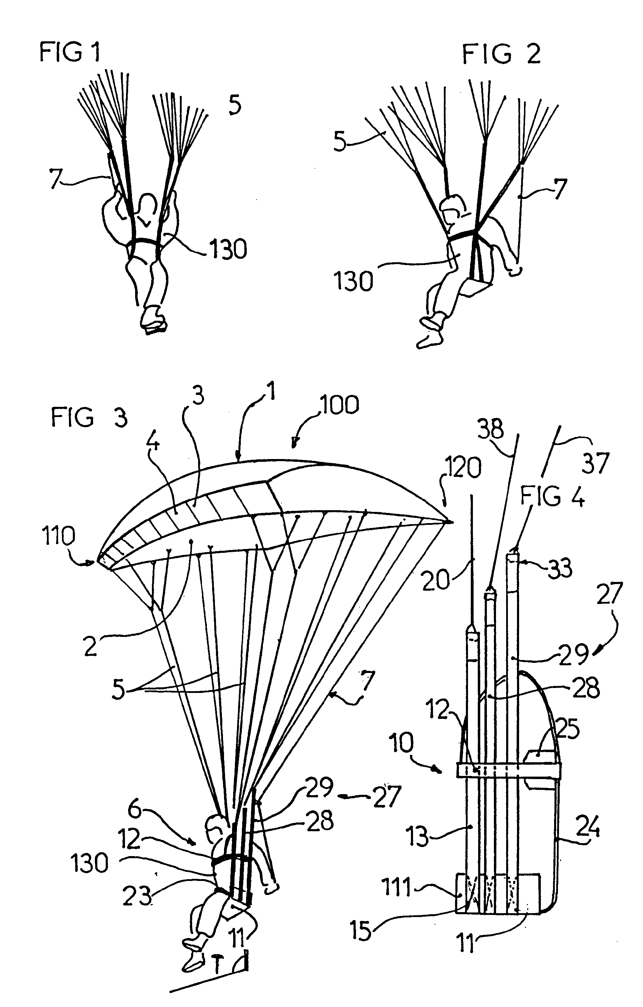

La figure 4 est une vue latérale.

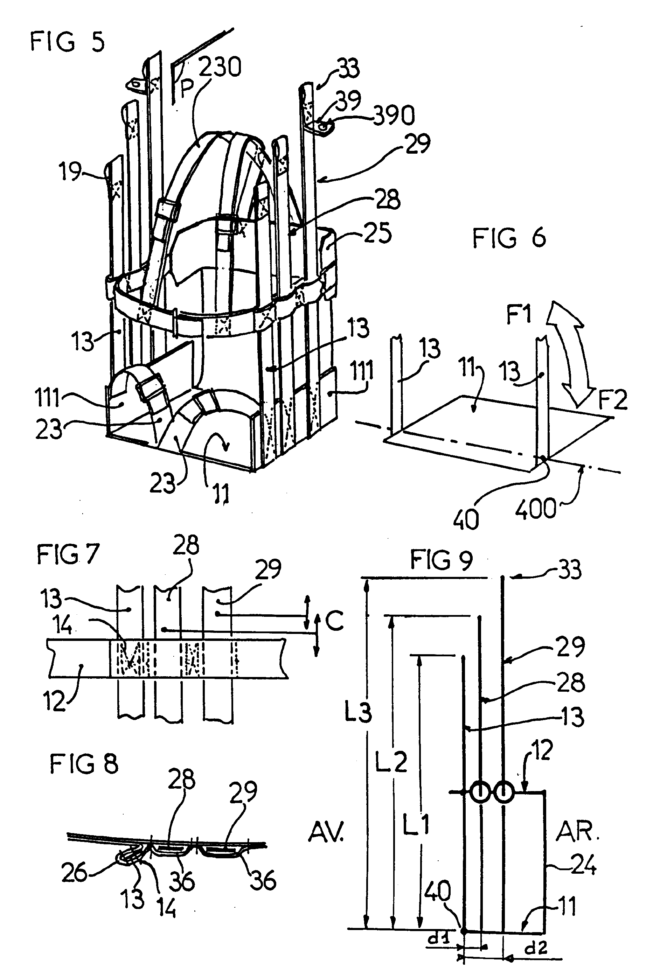

La figure 5 est une vue en perspective.

La figure 5a montre un perfectionnement.

Les figures 5b et 5c représentent des variantes de réalisation.

Les figures 6, 7 et 8 représentent des détails de construction.

Les figures 9 et 9a sont des vues latérales schématiques.

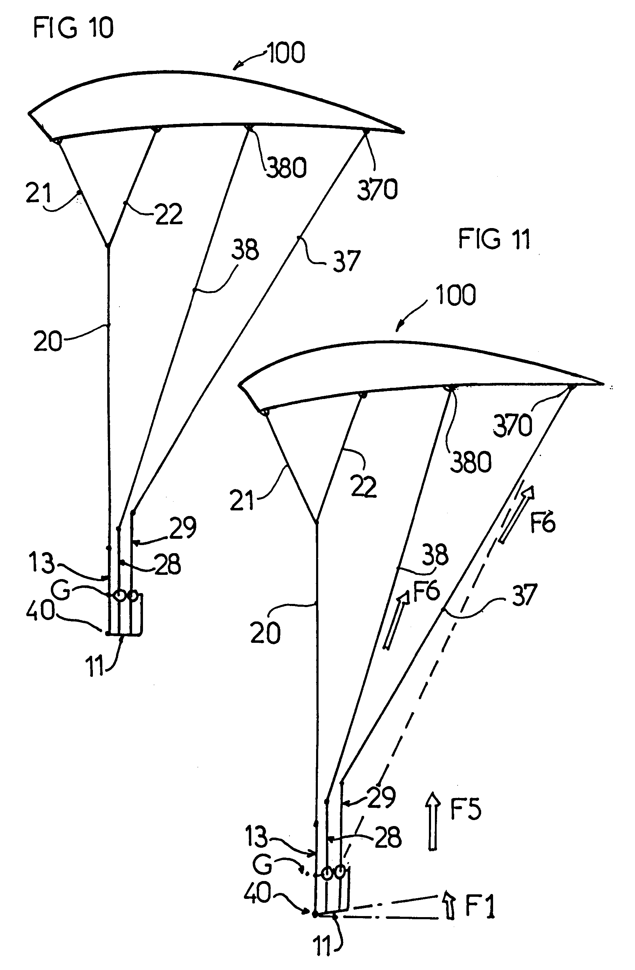

Les figures 10, 11 et 12 montrent le fonctionnement du harnais sellette de pilotage.

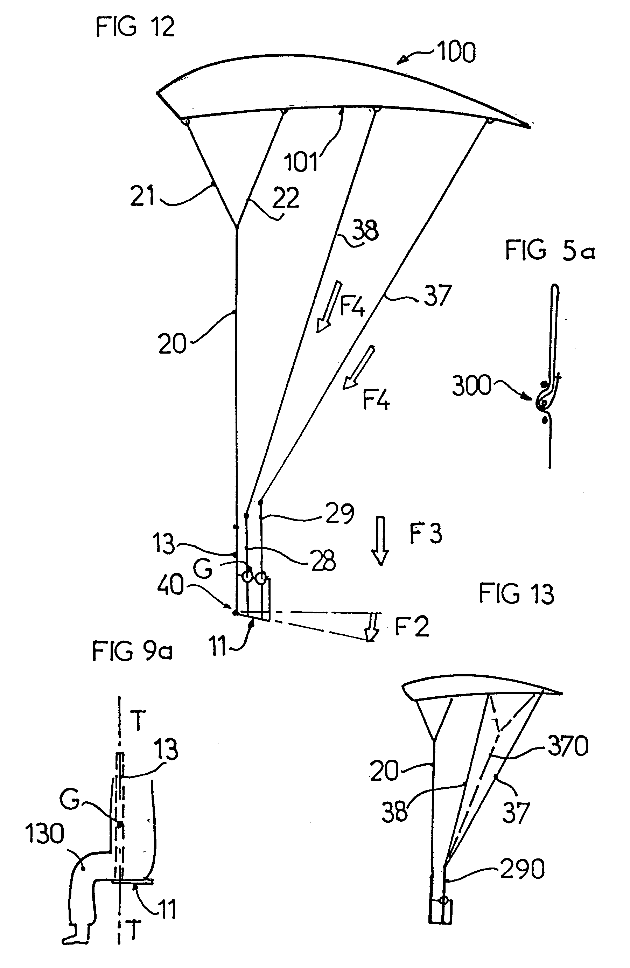

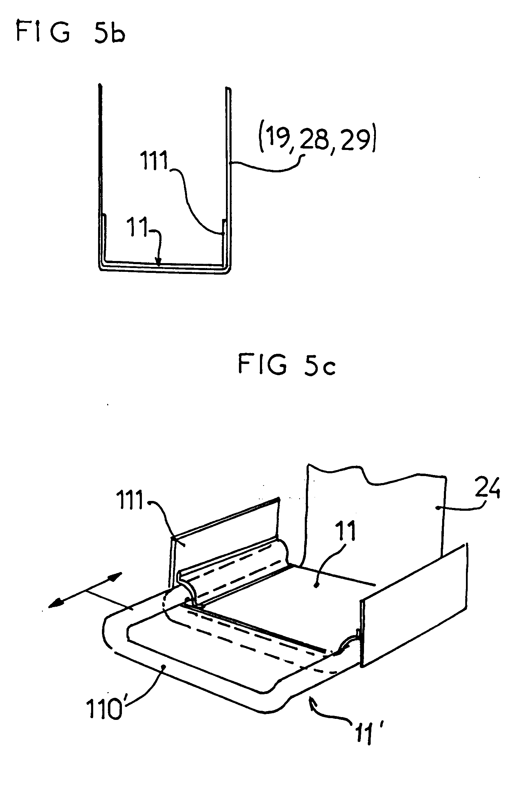

La figure 13 représente une variante.

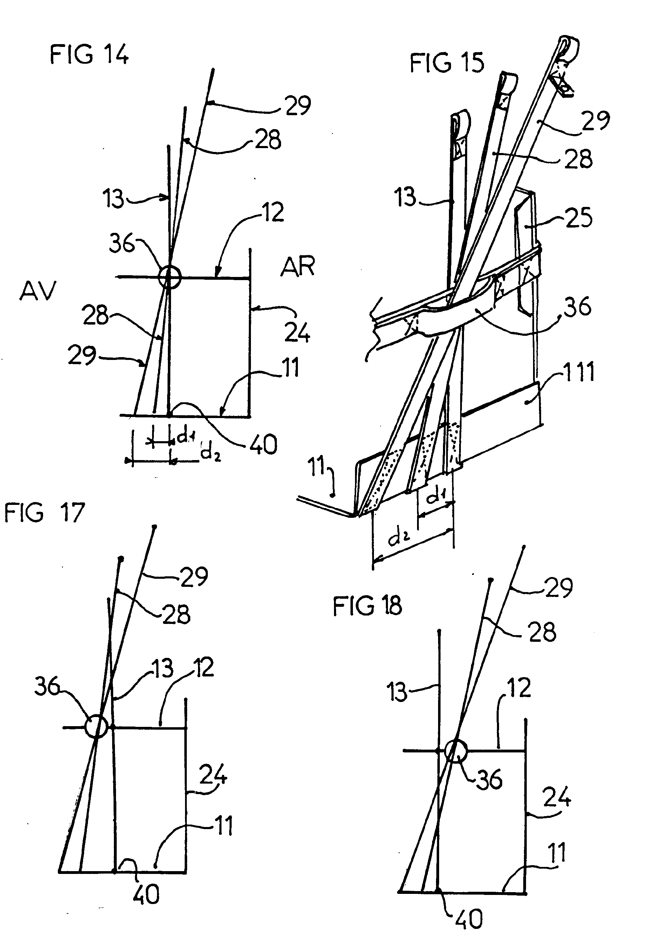

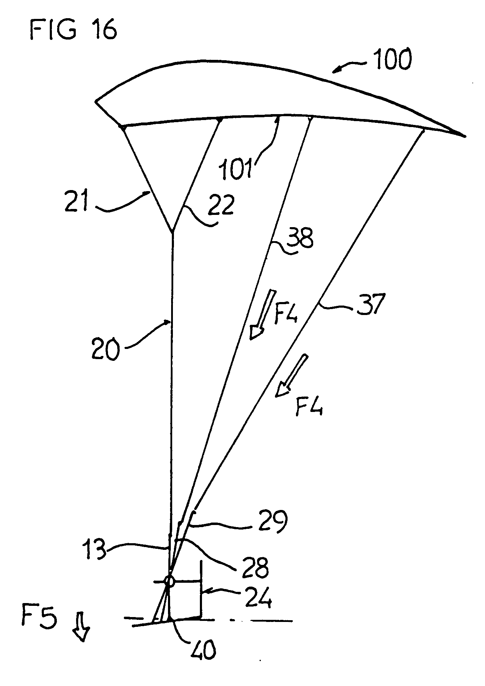

Les figures 14, 15 et 16, représentent un autre mode de réalisation.

La figure 14 est une vue similaire à la figure 9.

La figure 15 est une vue partielle en perspective montrant l'un des cotés de la sellette.

La figure 16 est une vue similaire à la figure 12.

Les figures 17 et 18 représentent des variantes.

Le parachute destiné à être utilisé avec le harnais sellette de pilotage selon l'invention comprend de façon connue en soi une paroi supérieure souple ou extrados (1) reliée à une paroi souple inférieure ou intrados (2), par des nervures (3) sensiblement verticales délimitant des caissons (4) appelées encore cellules ou tuyères, ouvertes vers l'avant ou bord d'attaque (110), et fermées à l'arrière ou bord de fuite (120). L'air pénétrant dans les caissons (4) donne sa forme à la voilure (100), et lui confère une certaine rigidité. Le parachute comprend entre autre des suspentes (5) reliant la voilure au harnais sellette (6) destiné à retenir le parachutiste (130). De plus le parachute comprend des drisses de commande (7) reliées au bord de fuite (120) permettant au parachutiste (130) de déformer le bord de fuite de l'aile et ainsi de se diriger par freinage.

Les figures 1 et 2 représentent les dispositifs de retenue selon l'art antérieur. La figure 1 montre un parachutiste (130) porté par un harnais classique, tandis-que la figure 2 représente un parachutiste supporté par un harnais sellette. Dans les deux cas le pilotage de l'aile se fait à l'aide des drisses de commande (7).

Les figures 3 à 9 représentent un mode de réalisation d'un dispositif de retenue et de pilotage, appellé aussi harnais sellette de pilotage, selon l'invention. Celui-ci comprend, d'une part un ensemble de retenue (10), et d'autre part des moyens de commande (27). Ledit ensemble de retenue (10) qui a un plan vertical de symétrie général (P), est constitué par un appui horizontal ou siège (11), et de chaque côté une sangle verticale ou élévateur principal (13), ainsi qu'une sangle ventrale ou ceinture (12). Le siège (11) est avantageusement rigide, et comprend de chaque coté des rebords latéraux (111) s'étendant vers le haut. Les deux élévateurs principaux (13) sont fixés par leur extrémité inférieure à l'avant du siège (11), et plus particulièrement à ses rebords latéraux par des coutures (15). D'autre part, la ceinture (12) est fixée audit élévateur principal, grâce à une couture (14). L'extrémité supérieure des élévateurs principaux comprend une partie repliée et cousue (19), pour constituer une boucle de fixation destinée à retenir l'extrémité inférieure des suspentes avants (20), qui à leur extrémité supérieure comprend avantageusement une patte d'oie (21,22).

Par ailleurs, l'ensemble de retenue (10) peut comprendre, comme cela est représenté à titre d'exemple, deux sangles de cuisse(23), un appui dorsal (24) ainsi que des bretelles (230). L'appui dorsal (24) relie la partie arrière du siège (11) à la partie arrière de la ceinture (12), et comporte des prolongements latéraux (25), afin d'améliorer le confort, et la securité de l'ensemble de retenue (10).

La fixation des élévateurs principaux (13) à la ceinture (12) peut être réalisée grâce à des boucle (26), à l'intérieur de laquelle ceux-ci passent et sont cousus,comme on peut le voir particulièrement aux figures 5 et 7.

Comme nous l'avons signalé précédemment le pilotage de l'aile se fait selon l'invention grâce à des moyens de pilotage ou de commande (27) associés à l'ensemble de retenue (10), et plus particulièrement à son siège (11).

Les moyens de commande (27) sont constitués, par des sangles verticales ou élévateurs (28,29) fixés de part et d'autre, et à l'arrière du siège (11). Avantageusement, les dits élévateurs de commande (28,29) sont fixés par couture aux rebords latéraux (111) du siège (11). Les extrémités supérieures desdits élévateurs de commande comprennent une boucle de fixation (19) permettant de relier le siège (11) à certaines suspentes, comme nous le verrons plus loin. Selon une des caractéristiques complémentaires de l'invention, les élévateurs de commande (28,29) sont montés coulissants par rapport à la ceinture (12). A cet effet, les parties médianes desdits élévateurs de commande passent dans des passages (36) réalisés avec la ceinture, comme cela est représenté figures 5, 7 et 8. Selon un mode préféré de l'invention, le dispositif de commande (27) comprend de part et d'autre de l'ensemble de retenue, d'une part un élévateur intermédiaire (28) de longueur L2, et d'autre part un élévateur arrière (29) de longueur L3. Les élévateurs principaux de l'ensemble de retenue ayant une longueur L1. Selon le mode de réalisation représenté nous avons L1 inférieure à L2, et L2 inférieure à L3. De plus les extrémités inférieures des élévateurs de commande sont cousues à l'arrière du siège (11) à des distances par rapport à l'élévateur principal (13) respectives de d1 pour ce qui est de l'élévateur intermédiaire (28), et de d2 pour l'élévateur arrière (29),(voir figure 9). Les distances citées précédemment sont telles que d2 est supérieure ou égal à 2 fois d1. Notons que l'extrémité supérieure (33) des élévateurs arrières (29) sont reliées aux extrémités inférieures des suspentes arrières (37), tandis-que les extrémités supérieures des élévateurs intermédiaires (28) sont reliées aux extrémités inférieures des suspentes intermédiaires (38).

Notons aussi que la partie supérieure des élévateurs arrières (29) comprend un prolongement (39), comprenant un oeillet (390) destiné au passage des drisses de commande (7) des freins.

Le pilotage de l'aile avec la sellette de pilotage selon l'invention, se fait par déformation de la voilure, ceci étant obtenu par modification de la position du parachutiste, comme nous allons nous en expliquer ci-après.

Le harnais sellette de pilotage peut être représenté schématiquement comme selon les figures 9, 10,11, et 12, et comprend donc des élévateurs de commande (28,29) coulissants par rapport à la ceinture (12) et leur position relative verticale par rapport aux élévateurs principaux se trouve donc être modifiée. Le siège (11) est articulé par rapport auxdits élévateurs principaux autour d'un axe de pivotement transversal (40). Cet axe de pivotement permet au siège (11) de pouvoir pivoter vers le haut selon F1, et vers le bas selon F2. Le pivotement selon F1 et F2 est réalisé par le parachutiste qui porte son poids respectivement soit vers l'avant, soit vers l'arrière. Lors de ces pivotements les élévateurs de commande (28,29) coulissent verticalement. On représentera par G le centre de gravité approximatif du parachutiste.

En position neutre innactive, (figure 10), le centre G est situé sensiblement dans le plan T des deux élévateurs principaux (13).

Le basculement vers l'arrière du parachutiste (figure 12) déplace vers l'arrière le centre de gravité G et fait ainsi pivoter le siège selon F2. Le pivotement du siège selon F2 autour de l'axe (40) provoque la traction vers le bas selon F3 des élévateurs de commande (28,29). Cet action a pour effet de tirer vers le bas selon F4 sur les suspentes intermédiaires (38) et arrière (37), provoquant ainsi la déformation du plan inférieure (101) de la voilure (100), sans pour autant détériorer la portance de l'aile qui conserve ainsi sa forme aérodynamique.

Le basculement vers l'avant du parachutiste (figure 11) déplace vers l'avant le centre de gravité G et fait ainsi pivoter le siège selon F1. Le pivotement du siège selon F1 autour de l'axe (40) provoque la libération vers le haut selon F5 des élévateurs de commande (28,29). Cet action a pour effet de soulager vers le haut selon F6 les suspentes intermédiaires (38) et arrière (37), provoquant ainsi la déformation du plan inférieure (101) de la voilure (100), sans pour autant détériorer la portance de l'aile qui conserve sa forme aérodynamique.

Bien entendu le harnais sellette selon l'invention n'est pas limité à la construction proposée. En effet celui-ci pourrait ne comporter de chaque coté qu'un seul élévateur de commande (290), comme cela est représenté à la figure 13. Auquel cas les élévateurs de commande seraient par exemple reliés aux suspentes intermédiaires et arrioères (38,37), ou à des suspentes (370) se prolongeant vers le haut par des pattes d'oie, comme cela est représenté en traits interrompus.

D'autre part les élévateurs peuvent être équipés de moyens de réglage en longueur (300), comme cela est par exemple illustré à la figure 5a. Il faut noter aussi que l'on ne sortirait pas du cadre de l'invention si les élévateurs avaient tous la même longueur.

La figure 5b montre une variante préférée selon laquelle, pour assurer une meilleure sécurité, les élévateurs sont continus et passent sous la sellette à laquelle ceux-ci sont cousus.

La figure 5c représente un perfectionnement de la sellette, perfectionnement constitué par un appui avant mobile (11'). Cedit appui étant réalisé par une barre (110') coulissante sur le siège (11) pouvant prendre deux positions, une position inactive rétractée représentée par des traits pointillés, et une position active représentée en trait plein. la position inactive rétractée étant utilisée lors de la course de démarrage, et la position active, étant utilisée pendant le vol, et permettant au pilote de rendre son basculement avant beaucoup plus efficace.

Les figures 14 à 18 montrent un autre mode de réalisation, selon lequel les élévateurs de commande intermédiaires (28) et arrière (29) sont fixés à la partie latérale avant du siège (11), par rapport à l'élévateur principal (13). Ainsi l'élévateur intermédiaire (28) est fixé au siège (11) à l'avant de l'élévateur principal (13) à une distance de celui-ci "d1", tandis-que l'élévateur arrière (29) est fixé à l'avant à une distance "d2" telle que "d2" soit supérieure à "d1". D'autre part les élévateurs principaux (13) sont, comme dans la réalisation précédente fixés par leur partie médiane à la ceinture (12), tandis-que les parties médianes des élévateurs intermédiaires (28) et des élévateurs arrières (29) sont montés coulissants sur ladite ceinture (12). A cet effet, les parties médianes des élévateurs de commande passent dans un passage (36) comme on peut le voir plus particulièrement à la figure 15. Lesdits passages (36) sont selon ce mode de réalisation, disposés à l'endroit où sont reliés les élévateurs principaux à la ceinture, mais il pourrait en être autrement comme cela est représenté aux figures 17 et 18. Selon la variante de la figure 17 les élévateurs de pilotage (28 et 29) sont coulissants sur la ceinture (12) à l'avant de l'élévateur principal (13), tandis-que selon la variante de la figure 18, les élévateurs de commande (28 et 29) sont coulissants sur la ceinture (12) à l'arrière dudit élévateur principal (13). Le basculement vers l'avant du parachutiste (figure 16) déplace vers l'avant le centre de gravité G et fait ainsi pivoter le siège selon F5. Le pivotement du siège selon F5 autour de l'axe (40) provoque la traction selon F4 des élévateurs de commande (28,29). Cet action a pour effet de tirer vers le bas les suspentes intermédiaires (38) et arrière (37), provoquant ainsi la déformation du plan inférieure (101) de la voilure (100), sans pour autant détériorer la portance de l'aile qui conserve sa forme aérodynamique.

Les dessins sont des représentations schématiques, pour faire mieux comprendre l'invention. Dans la réalité, et par exemple pour la figure 11 les suspentes (37), et les élévateurs (29) prendraient la position représentée en trait pointillé.

La figure 13 montre un dispositif de retenue comprenant un seul élévateur de commande (290) de chaque côté, tandis-que les autres figures montrent un dispositif comprenant deux élévateurs de commande (28,29), mais Il va de soit que l'on pourrait prévoir un nombre d'élévateurs latéraux de commande supérieur à deux.

**Revendications**

1. Dispositif de retenue (6) d'un parachutiste (130) à un parachute (100) du type à aile souple à caissons, comprenant un ensemble de retenue (10) destiné à retenir le parachutiste, caractérisé en ce qu'il comprend des moyens de pilotage (27) permettant au parachutiste (130) de modifier la forme du plan de voilure par déplacement de son centre de gravité G, lesdits moyens de pilotage étant constitués par l'ensemble de retenue (10) comprenant un appui horizontal ou siège (11), ainsi qu'une sangle verticale ou élévateur principal (13) et au moins une sangle verticale ou élévateur de commande (28,29) fixé latéralement de part et d'autre du siège (11), à une certaine distance "d" du point de fixation de l'élévateur principal (13) au siège, la déformation du plan de voilure étant causée par action du ou des élévateurs de commande (18,29) dont le mouvement est effectué par action pivotante du siège (11) (par déplacement du centre de gravité (G) du parachutiste) autour d'un axe transversal (40) situé au niveau du point de fixation de l'élévateur principal (13) au siège (11)..

2. Dispositif de retenue selon la revendication 1, caractérisé en ce que les élévateurs principaux (13) sont situés dans le plan tranversal vertical (T) passant sensiblement par le centre de gravité (G) du parachutiste, quand celui-ci est retenu dans son ensemble de retenue.

3. Dispositif de retenue selon l'une quelconque des revendications 1 ou 2, caractérisé en ce que l'élévateur de commande (28,29) est fixé latéralement au siège (11), derrière les élévateurs principaux.

4. Dispositif de retenue selon l'une quelconque des revendications 1 ou 2, caractérisé en ce que l'élévateur de commande (28,29) est fixé latéralement au siège (11), devant les élévateurs principaux .

5. Dispositif de retenue selon l'une quelconque des revendications précédentes, caractérisé en ce qu'il comprend une sangle horizontale ou ceinture (12) fixée sur les élévateurs principaux (13).

6. Dispositif de retenue selon la revendication 5, caractérisé en ce que le ou les élévateurs de commande (28,29) sont montés coulissants sur la ceinture (12).

7. Dispositif selon l'une quelconque des revendications 1 à 6, caractérisé en ce que les élévateurs de commande sont constitués par, de chaque coté du siège, d'une part un élévateur intermédiaire (28), et d'autre part un élévateur arrière (29),.

8. Dispositif de retenue selon la revendication 7, caractérisé en ce que les élévateurs intermédiaires (28) sont plus longs que les élévateurs principaux (13), tandis-que les élévateurs arrières (29) sont plus longs que les élévateurs intermédiaires (28).

9. Dispositif de retenue selon la revendication 7 ou 8, caractérisé en ce que les élévateurs arrières (29) sont fixés au siège (11) à une distance d2 des élévateurs principaux (13), telle que d2 est supérieure à deux fois la distance d1 qui sépare les élévateurs intermédiaires (28) desdits élévateurs principaux (13).

10. Dispositif de retenue selon l'une quelconque des revendications 7 à 9, caractérisé en ce que les élévateurs intermédiaires (28) et arrière (29) se croisent latéralement au niveau de l'élévateur principal (13).

11. Dispositif de retenue selon l'une quelconque des revendications 7 à 9, caractérisé en ce que les élévateurs intermédiaires (28) et arrière (29) se croisent latéralement derrière l'élévateur principal (13).

12. Dispositif de retenue selon l'une quelconque des revendications 7 à 9, caractérisé en ce que les élévateurs intermédiaires (28) et arrière (29) se croisent latéralement devant l'élévateur principal (13).

13. Dispositif de retenue selon l'une quelconque des revendications précédentes, caractérisé en ce que l'ensemble de retenue (10) comprend un appui dorsal (24) reliant le siège (11) à la ceinture (12).

14. Dispositif de retenue selon la revendication 13, caractérisé en ce qu'il comprend un appui avant (11') mobile sur le siège (11) pour prendre deux positions, une position inactive escamottée, et une position active prolongeant ledit siège vers l'avant.

15. Parachute équipé du dispositif de retenue selon l'une quelconque des revendications précédentes, caractérisé en ce qu'il comprend une paroi supérieure souple ou extrados (1), reliée à un paroi souple inférieure ou intados (2) par des nervures (3) sensiblement verticales délimitant des caissons (4) dont au moins certains sont ouverts vers l'avant au bord d'attaque (110), et fermés à l'arrière au bord de fuite (120), la partie inférieure dudit parachute étant reliée au dispositif de retenue (6) par des suspentes (5, 20,37,38).

16. Parachute selon la revendication 15, caractérisé en ce que les élévateurs principaux (13) sont reliés aux suspentes avants, tandisque le, ou les élévateurs de commande sont reliés aux autres suspentes (37,38).

17. Parachute selon la revendication 16, caractérisé en ce que les élévateurs intermédiaires (28) sont reliés aux suspentes intermédiaires (38), et les élévateurs arrières (29) sont reliés aux suspentes arrières (37).

18. Parachute selon la revendication 17, caractérisé en ce que les suspentes avants (20) sont reliés à la voilure par une patte d'oie (21,22).

**Patentansprüche**

1. Haltevorrichtung (6) eines Fallschirmspringers (130) mit einem Fallschirm (100) vom Weichflügel-Caissons-Typ, mit einer Halteeinrichtung (10), die dafür bestimmt ist, den Fallschirmspringer zu halten, dadurch gekennzeichnet, daß sie Flugsteuereinrichtungen (27) aufweist, welche es dem Fallschirmspringer (130) gestatten, die Form der Ebene der Fallschirmkappe durch Verschiebung seines Schwerpunktes (G) zu verändern, wobei die Flugsteuerungseinrichtungen aus der Halteeinrichtung (10) bestehen mit einer horizontalen Auflage oder einem Sitz (11) sowie einem vertikalen Gurt oder Haupttragriemen (13) und zumindest einem vertikalen Gurt oder Steuertragriemen (28, 29), welcher seitlich an beiden Seiten des Sitzes (11) befestigt ist, und zwar bei einem bestimmten Abstand "d" von dem Befestigungspunkt des Haupttragriemens (13) an dem Sitz, wobei die Verformung der Ebene der Fallschirmkappe verursacht wird durch die Einwirkung des oder der Steuertragriemen (18, 29), deren Bewegung durch die Drehwirkung des Sitzes (11) bewerkstelligt wird (durch Verschieben des Schwerpunktes (G) des Fallschirmspringers), und zwar um eine transversale Achse (40) welche sich auf der Höhe des Befestigungspunktes des Haupttragriemens (13) und dem Sitz (11) befindet.

2. Haltevorrichtung nach Anspruch 1, dadurch gekennzeichnet, daß die Hauptträger (13) sich in der transversalen vertikalen Ebene (T) befinden, die im wesentlichen durch den Schwerpunkt (G) des Fallschirmspringers verläuft, wenn dieser in seiner Halteeinrichtung gehalten wird.

3. Haltevorrichtung nach einem der Ansprüche 1 oder 2, dadurch gekennzeichnet, daß der Steuertragriemen (28, 29) seitlich an dem Sitz (11) hinter den Haupttragriemen befestigt ist.

4. Haltevorrichtung nach einem der Ansprüche 1 oder 2, dadurch gekennzeichnet, daß der Steuertragriemen (28, 29) seitlich an dem Sitz (11) vor den Haupttragriemen befestigt ist.

5. Haltevorrichtung nach einem der vorhergehenden Ansprüche, dadurch gekennzeichnet, daß er einen horizontalen Riemen oder Gürtel (12) aufweist, welcher auf den Haupttragriemen ( 13) befestigt ist.

6. Haltevorrichtung nach Anspruch 5, dadurch gekennzeichnet, daß der oder die Steuertragriemen (28, 29) gleitend auf dem Gürtel (12) befestigt sind.

7. Vorrichtung nach einem der Ansprüche 1 bis 6, dadurch gekennzeichnet, daß die Steuertragriemen auf beiden Seiten des Sitzes zum einen aus einem Zwischentragriemen (28) und zum anderen aus einem hinteren Tragriemen (29) bestehen.

8. Haltevorrichtung nach Anspruch 7, dadurch gekennzeichnet, daß die Zwischentragriemen (28) länger sind als die Haupttragriemen (13), während die hinteren Tragemen (29) länger sind als die Zwischentragriemen (28).

9. Haltevorrichtung nach Anspruch 7 oder 8, dadurch gekennzeichnet, daß die hinteren Tragemen (29) an dem Sitz (11) in einem Abstand d2 von den Haupttragemen ( 13) befestigt sind, so daß d2 größer ist als zweimal der Abstand d1, welcher die Zwischentragriemen (28) von den Haupttragemen (13) trennt.

10. Haltevorrichtung nach einem der Ansprüche 7 bis 9, dadurch gekennzeichnet, daß die Zwischentragemen (28) und hinteren Tragriemen) sich in der Höhe des Haupttragriemens (13) seitlich kreuzen.

11. Haltevorrichtung nach einem der Ansprüche 7 bis 9, dadurch gekennzeichnet, daß die Zwischentragemen (28) und hinteren Tragriemen (29) sich hinter dem Haupttragemen (13) seitlich kreuzen.

12. Haltevorrichtung nach einem der Ansprüche 7 bis 9, dadurch gekennzeichnet, daß die Zwischentragemen (28) und hinteren Tragriemen (29) sich vor dem Haupttragemen (13) seitlich kreuzen.

13. Haltevorrichtung nach einem der vorhergehenden Ansprüche, dadurch gekennzeichnet, daß die Halteeinrichtung (10) eine Rückenstütze (24) aufweist, die den Sitz (11) mit dem Gürtel (12) verbindet.

14. Haltevorrichtung nach Anspruch 13, dadurch gekennzeichnet, daß sie eine auf dem Sitz (11) bewegliche Vorderstütze (11') aufweist, um zwei Positionen einzunehmen, und zwar eine inaktive eingezogene und eine aktive, den Sitz nach vorne verlängernde Position.

15. Fallschirm, der mit der Haltevorrichtung nach einem der vorhergehenden Ansprüche ausgestattet ist, dadurch gekennzeichnet, daß er eine obere weiche Wand oder eine äußere Wölbfläche (1) aufweist, welche mit einer weichen unteren Wand oder einer inneren Wölbfläche (2) durch Rippen (3) verbunden ist, welche im wesentlichen vertikal sind und Caissons (4) festlegen, von denen gewissen nach vorne zu der kappenbasis (10) hin geöffnet sind und hinter am Scheitellochrand (120) geschlossen sind, wobei der untere Teil des Fallschirms mit der Haltevorrichtung (6) durch die Fangleinen (5, 20, 37, 38) verbunden ist.

16. Fallschirm nach Anspruch 15, dadurch gekennzeichnet, daß die Haupttragriemen (13) mit den vorderen Fangleinen verbunden sind, während der oder die Steuertragriemen mit den anderen Fangleinen (37, 38) verbunden sind.

17. Fallschirm nach Anspruch 16, dadurch gekennzeichnet, daß die Zwischentragriemen (28) mit den Zwischenfangleinen (38) verbunden sind und die hinteren Tragriemen (29) mit den hinteren Fangriemen (37) verbunden sind.

18. Fallschirm nach Anspruch 17, dadurch gekennzeichnet, daß die vorderen Fangleinen (20) mit der Fallschirmkappe über eine Gabelung (21, 22) verbunden sind.

## Claims

1. Device (6) for holding a parachutist (130) to a parachute (100) of the type having a non-rigid wing with coffers, comprising a holding unit (10) for holing the parachutist, characterized in that it comprises steering means (27) enabling the parachutist (130) to alter the shape of the canopy plane by moving its centre of gravity G, said steering means being formed by the holding unit (10) comprising a horizontal support or seat (11), and a vertical strap or main lifting means (13) and at least one vertical strap or control lifting means (28, 29) fixed laterally on either side of the seat (11), at a certain distance "d" from the point at which the main lifting means (13) is fixed to the seat, the deformation of the canopy plane being effected by the action of the control lifting means (18, 29) whereof the movement is effected by the pivotal action of the seat (11) (by moving the centre of gravity (G) of the parachutist) about a transverse axis (40) situated at the level of the point at which the main lifting means (13) is fixed to the seat (11).

2. Holding device according to Claim 1, characterized in that the main lifting means (13) are situated in the vertical transverse plane (T) which substantially passes through the centre of gravity (G) of the parachutist when the latter is held in the holding unit thereof.

3. Holding device according to either of Claims 1 or 2, characterized in that the control lifting means (28, 29) is fixed laterally to the seat (11), behind the main lifting means.

4. Holding device according to either of Claims 1 or 2, characterized in that the control lifting means (28, 29) is fixed laterally to the seat (11), in front of the main lifting means.

5. Holding device according to any of the preceding claims, characterized in that it comprises a horizontal strap or belt (12) which is fixed on the main lifting means (13).

6. Holding device according to Claim 5, characterized in that the control lifting means (28, 29) are mounted so as to slide on the belt (12).

7. Device according to any one of Claims 1 to 6, characterized in that the control lifting means are formed, on each side of the seat, on the one hand by an intermediate lifting means (28), and on the other hand by a rear lifting means (29).

8. Holding device according to Claim 7, characterized in that the intermediate lifting means (28) are longer than the main lifting means (13) whilst the rear lifting means (29) are longer than the intermediate lifting means (28).

9. Holding device according to Claim 7 or 8, characterized in that the rear lifting means (29) are fixed to the seat (11) at a distance d2 from the main lifting means (13) such that d2 is greater than twice the distance d1 which separates the intermediate lifting means (28) from the said main lifting means (13).

10. Holding device according to any one of Claims 7 to 9, characterized in that the intermediate lifting means (28) and rear lifting means (29) intersect laterally at the level of the main lifting means (13).

11. Holding device according to any one of Claims 7 to 9, characterized in that the intermediate lifting means (28) and rear lifting means (29) intersect laterally behind the main lifting means (13).

12. Holding device according to any one of Claims 7 to 9, characterized in that the intermediate lifting means (28) and rear lifting means (29) intersect laterally in front of the main lifting means (13).

13. Holding device according to any of the preceding claims, characterized in that the holding unit (10) comprises a back support (24) connecting the seat (11) to the belt (12).

14. Holding device according to Claim 13, characterized in that it comprises a front support (11') which is movable on the seat (11) to adopt two positions, a retracted inactive position, and an active position forwardly extending the said seat.

15. Parachute equipped with the holding device according to any of the preceding claims, characterized in that it comprises a non-rigid upper or top face (1), connected to a non-rigid lower or bottom face (2) by way of substantially vertical ribs (3) delimiting coffers (4) whereof at least some are open towards the front at the leading edge (110), and closed at the rear at the trailing edge (120), the lower part of the said parachute being connected to the holding device (6) by way of suspension lines (5, 20, 37, 38).

16. Parachute according to Claim 15, characterized in that the main lifting means (13) are connected to the front suspension lines, whilst the control lifting means are connected to the other suspension lines (37, 38).

17. Parachute according to Claim 16, characterized in that the intermediate lifting means (28) are connected to the intermediate suspension lines (38), and the rear lifting means (29) are connected to the rear suspension lines (37).

18. Parachute according to Claim 17, characterized in that the front suspension lines (20) are connected to the canopy by way of a forking (21, 22).

FIG 1

FIG 2

FIG 3

FIG 4

FIG 5

P 230

33

39

390

29

28

25

19

13

13

111

111

23

23

11

FIG 6

F1

13

11

13

F2

40

400

FIG 7

28

29

13

14

12

C

FIG 8

28

29

26

36

36

13

14

FIG 9

33

29

28

13

L3

L2

L1

AV.

AR.

12

24

40

11

d1

d2

FIG 10

FIG 11

FIG 12

100

101

21

22

38

FIG 5a

F4

37

20

F4

300

29

13

F 3

G

28

40

FIG 13

11

F 2

FIG 9a

T

13

G

130

20

370

38

37

11

290

T

FIG 5b

FIG 5c

FIG 14

FIG 15

FIG 17

FIG 18

FIG 16